# EUROPÄISCHE PATENTANMELDUNG

(11) **EP 3 354 450 A1**
(43) Veröffentlichungstag der Anmeldung: **01.08.2018**
(21) Anmeldenummer: 17153550.3
(22) Anmeldetag: 27.01.2017
(51) Int. Cl.: B29D 99/00, B29C 70/54, B29C 59/00, B29C 59/02, B29C 70/52, B29C 70/44, F03D 1/06, B29L 31/08

(54) **PULTRUDIERTES PROFIL FÜR EIN STRUKTURBAUTEIL EINER WINDENERGIEANLAGE**

(71) Anmelder: Nordex Energy GmbH, 22419 Hamburg (DE)
(72) Erfinder: Weber, Ronald, 18181 Graal-Müritz (DE)
(74) Vertreter: Hauck Patentanwaltspartnerschaft mbB

(57) **Zusammenfassung**

Pultrudiertes Profil (10) für ein Strukturbauteil eines Windenergieanlagenrotorblatts, wobei das pultrudierte Profil (10) aus einem faserverstärkten Kunststoffmaterial besteht und zwei einander gegenüberliegende Stirnseiten (14) sowie zwei einander gegenüberliegende Flachseiten (16) aufweist, wobei an jeder der Flachseiten (16) zwei sich in Längsrichtung des pultrudierten Profils (10) erstreckende Stege (18) und eine dazwischen angeordnete Vertiefung (20) ausgebildet sind, wobei mindestens zwei der Stege (18) eine Vielzahl von Kanälen (22) aufweist, die jeweils von einer der Stirnseiten (14) zu einer der Vertiefungen (20) führen.

## Beschreibung

Die Erfindung betrifft ein pultrudiertes Profil für ein Strukturbauteil eines Windenergieanlagenrotorblatts. Strukturbauteile von Windenergieanlagenrotorblättern, beispielsweise Holme, Gurte, Stege oder Halbschalen werden seit langem überwiegend aus faserverstärkten Kunststoffmaterialien gefertigt. Hierzu können die Verstärkungsfasern beispielsweise in Form von Matten, Geweben oder Gelegen verarbeitet werden, die mit einem flüssigen Kunststoffmaterial durchtränkt werden. Dies kann z.B. im Handlaminierverfahren oder in einem Vakuuminfusionsverfahren geschehen. Seit einiger Zeit werden auch pultrudierte Profile für solche Strukturbauteile verwendet. Diese werden in einem sogenannten Pultrusionsverfahren hergestellt und in der Regel erst nach dem Aushärten der Profile bei der Herstellung des Strukturbauteils weiterverarbeitet, zumeist durch Verbinden mehrerer pultrudierter Profile. Pultrudierte Profile zeichnen sich durch eine gestreckte Anordnung der Verstärkungsfasern, einen hohen und präzise vorgebbaren Faservolumengehalt, exakt vorgebbare Querschnitte und eine theoretisch unbegrenzte Länge aus. Diese Eigenschaften können aus pultrudierten Profilen hergestellten Strukturbauteilen zugutekommen und diesen insbesondere eine besonders hohe Festigkeit bei geringem Gewicht verleihen.

Allerdings bringt die Verarbeitung der pultrudierten Profile zusätzliche Schwierigkeiten mit sich, die darin begründet sind, dass die relativ großformatigen, undurchlässigen, pultrudierten Profile miteinander und gegebenenfalls mit weiteren, an das Strukturbauteil angrenzenden Elementen des Windenergieanlagenrotorblatts sicher/anforderungsgerecht verbunden werden müssen. Häufig geschieht dies in einem Vakuuminfusionsverfahren, in dem es darauf ankommt, alle zwischen den einzelnen Elementen vorhandenen Hohlräume vollständig mit dem infundierten flüssigen Kunststoffmaterial auszufüllen.

Aus der Druckschrift EP 1 754 589 B1 ist ein pultrudiertes Profil aus einem faserverstärkten Kunststoffmaterial zur Verwendung in einem Windenergieanlagenrotorblatt bekannt geworden. Das Profil weist einen rechteckigen Querschnitt auf. An den beiden Flachseiten des Profils sind schräg zur Längsrichtung des Profils angeordnete Kanäle angeordnet.

Aus der Druckschrift WO 2014/079456 A1 sind pultrudierte Profile aus einem faserverstärkten Kunststoffmaterial zur Verwendung in einem Windenergieanlagenrotorblatt bekannt geworden. Diese weisen an ihren beiden Flachseiten durch Entfernen eines Abreißgewebes für eine Verklebung vorbereitete Flächen auf. Zu den Rändern hin verringert sich die Dicke der Profile, so dass die vorbereiteten Flächen bei übereinander gestapelten Profilen aneinander anliegen und der dazwischen befindliche Freiraum von den Seiten aus zugänglich ist.

Aus der Druckschrift DE 10 2015 007 289 A1 ist ein Verfahren zur Herstellung eines Rotorblattgurts aus pultrudierten Profilen bekannt geworden. Nach dem Entfernen von Abreißgeweben von den Flachseiten der Profile verbleiben seitliche Stege, die in einem Nachbearbeitungsschritt abgesägt oder abgeschliffen werden sollen. Alternativ soll zwischen den Stegen eine Fließhilfe angeordnet werden.

Davon ausgehend ist es die Aufgabe der Erfindung, pultrudierte Profile aus einem faserverstärkten Kunststoffmaterial zur Verfügung zu stellen, die bei übereinanderliegender Anordnung besonders einfach und zuverlässig in einem Vakuuminfusionsverfahren miteinander verbunden werden können.

Diese Aufgabe wird gelöst durch das pultrudierte Profil mit den Merkmalen des Anspruchs 1. Vorteilhafte Ausgestaltungen sind in den sich anschließenden Unteransprüchen angegeben.

Das pultrudierte Profil ist für ein Strukturbauteil eines Windenergieanlagenrotorblatts vorgesehen, besteht aus einem faserverstärkten Kunststoffmaterial und weist zwei einander gegenüberliegende Stirnseiten sowie zwei einander gegenüberliegende Flachseiten auf, wobei an jeder der Flachseiten zwei sich in Längsrichtung des pultrudierten Profils erstreckende Stege und eine dazwischen angeordnete Vertiefung ausgebildet sind, wobei mindestens zwei der Stege eine Vielzahl von Kanälen aufweisen, die jeweils von einer der Stirnseiten zu einer der Vertiefungen führen.

Das pultrudierte Profil wird bei der Fertigung mit einem Oberflächenschutz versehen, z.B. in Form von Abreißgewebe aus Verstärkungsfasern (z.B. aus Polyamid), welcher auf die noch nicht vollständig ausgehärtete Oberfläche aufgebracht und in diese eingeprägt wird. Er kann gemeinsam mit den Verstärkungsfasern und einem flüssigen Kunststoffmaterial durch eine Blende einer Pultrusionsvorrichtung hindurchgeführt werden, so dass er an den Flachseiten in den Querschnitt des pultrudierten Profils integriert ist. Vor der Weiterverarbeitung des Profils, beispielsweise vor dem Stapeln bei der Fertigung eines Gurtes für ein Windenergieanlagenrotorblatt, wird das Abreißgewebe von der Oberfläche entfernt. Dieser Vorgang sorgt für eine bei der nachfolgenden Verbindung optimal vorbereitete Oberflächenstruktur im Bereich der Vertiefungen, die insbesondere frei von Trennmitteln ist. Da das Abreißgewebe nicht bis an den Rand der Profile aufgebracht wird oder werden kann, entstehen beim Entfernen des Abreißgewebes an den Rändern die sich in Längsrichtung des Profils erstreckenden sogenannten Stege und die dazwischen angeordneten Vertiefungen. Fertigungsbedingt können die pultrudierten Profile an den Kanten zwischen Stirn- und Flachseiten einen Eckradius oder eine Fase aufweisen.

Das pultrudierte Profil kann einen im Wesentlichen rechteckigen Querschnitt aufweisen. Die beiden Stirnseiten können beispielweise eine Höhe im Bereich von 0,5 mm bis 10 mm, insbesondere im Bereich von 2 mm bis 8 mm, aufweisen, entsprechend einer Dicke des pultrudierten Profils. Die beiden Flachseiten können eine Breite im Bereich von beispielsweise 10 mm bis 200 mm, insbesondere im Bereich von 40 mm bis 150 mm aufweisen, entsprechend einer Breite des pultrudierten Profils. Die Vertiefungen können einen im Wesentlichen rechteckigen Querschnitt aufweisen mit einer Tiefe beispielsweise im Bereich von 0,01 mm bis 0,2 mm, insbesondere im Bereich von etwa 0,03 mm bis 0,1 mm. Diese Tiefe entspricht im Wesentlichen der Dicke des abgezogenen Abreißgewebes. Die Vertiefungen erstrecken sich jeweils über einen Großteil der Breite der Flachseiten, insbesondere über mindestens zwei Drittel davon, entsprechend der Breite des Abreißgewebes. Die Breite der Stege beträgt jeweils vorzugsweise im Bereich von etwa 1 mm bis etwa 15 mm, wobei die Breite beider Stege zusammen vorzugsweise ein Drittel oder weniger der Breite der Flachseiten ausmacht.

Die Kanäle verlaufen jeweils von einer der Stirnseiten zu einer der Vertiefungen, d.h. sie stellen insbesondere bei mehreren übereinandergestapelten pultrudierten Profilen eine Verbindung zwischen einem Bereich seitlich der pultrudierten Profile und einem von der betreffenden Vertiefung gebildeten Hohlraum zwischen zwei pultrudierten Profilen her, durch den ein flüssiges Kunststoffmaterial in den Hohlraum einströmen kann.

Bei der Erfindung weisen mindestens zwei der Stege Kanäle auf, so dass das flüssige Kunststoffmaterial in einem Vakuuminfusionsaufbau durch die in einem dieser Stege angeordneten Kanäle zugeführt und die in dem Hohlraum befindliche Luft durch die anderen Kanäle entweichen kann. Somit ist ein planmäßiger Volumenstrom zur vollständigen Infusion der von den Vertiefungen ausgebildeten Hohlräume möglich. Durch die Kanäle wird verhindert, dass die Stege bei aufeinandergestapelten pultrudierten Profilen, wenn die Stege also aneinander liegen, Barrieren bilden, die die Harzverteilung bei der Vakuuminfusion behindern.

Beispielsweise können die Kanäle in den beiden Stegen einer der Flachseiten ausgebildet sein, wobei die beiden Stege der anderen Flachseite keine Kanäle aufweisen. Alternativ können die Kanäle in zwei einander diagonal gegenüberliegenden Stegen des pultrudierten Profils (betrachtet im Querschnitt) ausgebildet sein, wobei die beiden anderen Stege keine Kanäle aufweisen. In beiden Fällen ist bei mehreren übereinandergestapelten pultrudierten Profilen ein Volumenstrom in Breitenrichtung der pultrudierten Profile durch die von zwei aneinander angrenzenden Vertiefungen gebildeten Hohlräume hindurch möglich.

In einer Ausgestaltung sind die Kanäle in allen vier Stegen ausgebildet. Die pultrudierten Profile zeichnen sich somit durch eine besondere Symmetrie aus und können in beliebiger Anordnung miteinander kombiniert werden, wobei stets ausreichend Kanäle zur Erschließung aller Hohlräume vorhanden sind.

In einer Ausgestaltung sind in den Stegen verlaufende Verstärkungsfasern des faserverstärkten Kunststoffmaterials im Bereich der Kanäle durchtrennt. Diese Ausgestaltung ergibt sich insbesondere, wenn die Kanäle in einem zerspanenden Verfahren nach dem vollständigen Aushärten des pultrudierten Profils hergestellt werden. Vorteilhaft ist, dass die Verstärkungsfasern ihre durch die Pultrusion erzielte, geradlinige und gestreckte Anordnung behalten. Die Schwächung des pultrudierten Profils beschränkt sich auf den Bereich der Kanäle und betrifft daher nur einen kleinen Teil des Gesamtquerschnitts des pultrudierten Profils. Ein weiterer Vorteil ist, dass das pultrudierte Profil seine exakte, durch den Pultrusionsprozess vorgegebene Querschnittsgeometrie exakt einhält.

In einer Ausgestaltung sind in den Stegen verlaufende Verstärkungsfasern des faserverstärkten Kunststoffmaterials im Bereich der Kanäle nicht durchtrennt, sondern um die Kanäle herum verlaufend angeordnet. Dies kann insbesondere erreicht werden, wenn die Herstellung der Kanäle nicht mit einem zerspanenden Verfahren, sondern durch Verformen des pultrudierten Profils nach der Pultrusion hergestellt wird, insbesondere durch Prägen. Dies kann vorzugsweise vor dem vollständigen Aushärten des pultrudierten Profils erfolgen. Durch das Einprägen der Kanäle wird der gradlinige Verlauf der Verstärkungsfasern im Bereich der Stege modifiziert, die Durchgängigkeit der einzelnen Verstärkungsfasern bleibt jedoch erhalten. Auch dies kann mit Blick auf die Eigenschaften des pultrudierten Profils vorteilhaft sein. Insbesondere wird eine aufwändige und weniger wirtschaftliche Nachbearbeitung der Profile vermieden.

In einer Ausgestaltung sind die Kanäle geradlinig und quer zu einer Längsrichtung des pultrudierten Profils ausgerichtet. Grundsätzlich können die Kanäle auch schräg zur Längsrichtung des pultrudierten Profils und/oder gekrümmt ausgebildet sein. Die geradlinige Ausführung der Kanäle, insbesondere bei einer Ausrichtung orthogonal zur Längsrichtung des pultrudierten Profils, stellt eine besonders kurze Verbindung zu den von den Vertiefungen gebildeten Hohlräumen her.

In einer Ausgestaltung weisen die Kanäle einen halbkreisförmigen, trapezförmigen, ellipsenförmigen bzw. ovalen oder rechteckigen Querschnitt auf. Dabei kann die Querschnittsfläche der Kanäle so auf deren Anzahl abgestimmt sein, dass ein hinreichender Volumenstrom zur Erschließung aller Hohlräume erzielt wird.

In einer Ausgestaltung weisen die Vertiefungen eine ebene Bodenfläche auf. Dadurch erhalten die zwischen zwei aneinandergrenzenden pultrudierten Profilen ausgebildeten Hohlräume eine gleichmäßige Höhe, was für eine optimale Verbindung vorteilhaft ist. Außerdem können Vertiefungen mit einer ebenen Bodenfläche besonders einfach hergestellt werden, insbesondere durch Entfernen eines Abreißgewebes.

In einer Ausgestaltung ist eine Tiefe der Kanäle mindestens so groß wie eine Tiefe der jeweils angrenzenden Vertiefung. Insbesondere kann die Tiefe der Kanäle im Wesentlichen gleichgroß sein wie die Tiefe der jeweils angrenzenden Vertiefung. Dadurch wird ein ausreichender Volumenstrom in die Vertiefung hinein ermöglicht. In einer Ausgestaltung ist eine Tiefe und/oder ein Querschnitt der Kanäle an ihren stirnseitigen Enden größer als an ihren vertiefungsseitigen Enden. Diese Querschnittsaufweitung zur Stirnseite des pultrudierten Profils hin kann einen hinreichenden Volumenstrom in die Vertiefung hinein begünstigen.

In einer Ausgestaltung erstrecken sich die Kanäle bis in eine jeweils angrenzende Vertiefung hinein. Die Länge der Kanäle erstreckt sich also über die Breite des Stegs hinaus bis in die Vertiefung hinein und setzt sich im Boden der Vertiefung fort, insbesondere ein Stück weit in Richtung zur Mitte der Vertiefung hin. Insbesondere kann die Tiefe der Kanäle in Richtung zu der Mitte der Vertiefung hin abnehmen bzw. die Kanäle können langsam in die Vertiefung hinein auslaufen. Durch das Erstrecken der Kanäle in die Vertiefung hinein kann der Volumenstrom in die von den Vertiefungen ausgebildeten Hohlräume begünstigt werden.

In einer Ausgestaltung ist eine Breite der Kanäle in einer Längsrichtung des pultrudierten Profils kleiner als ein Abstand zwischen zwei benachbarten Kanälen. Beispielsweise können die Kanäle jeweils eine Breite im Bereich von 0,1 mm bis 3 mm aufweisen und in einem entsprechend größeren Abstand voneinander angeordnet sein. Beispielsweise kann zwischen zwei benachbarten Kanälen ein Abstand im Bereich von 5 mm bis 30 mm ausgebildet sein. Somit ist die Breite des zwischen den Kanälen verbleibenden Stegs (betrachtet in Längsrichtung des pultrudierten Profils) stets größer als die Breite der Kanäle. Dadurch wird sichergestellt, dass zwei übereinander angeordnete, pultrudierte Profile wie vorgesehen im Bereich der Stege aneinander anliegen, ohne dass Teile des verbleibenden Stegs in einen Kanal hineinreichen und einen Kanal versperren bzw. einer exakt parallelen Anordnung zweier pultrudierter Profile entgegenwirken.

In einer Ausgestaltung richtet sich die Erfindung auf ein Strukturbauteil für ein Windenergieanlagenrotorblatt, wobei das Strukturbauteil mindestens zwei übereinander angeordnete, pultrudierte Profile nach einem der Ansprüche 1 bis 11 aufweist und die beiden Stege einer oberen Flachseite des einen pultrudierten Profils an den beiden Stegen einer unteren Flachseite des anderen pultrudierten Profils anliegen, so dass zwischen den Vertiefungen der genannten Flachseiten ein Abstand ausgebildet ist. Die in mindestens zwei Stegen jedes der pultrudierten Profile ausgebildeten Kanäle ermöglichen dann ein planmäßiges Einströmen eines flüssigen Kunststoffmaterials in die von den Vertiefungen ausgebildeten Hohlräume. Insbesondere kann der Querschnitt des Strukturbauteils aus einer Vielzahl der pultrudierten Profile aufgebaut sein. Insbesondere können zwei oder mehr der pultrudierten Profile übereinandergestapelt sein, so dass sie wie vorstehend erläutert mit ihren Stegen aneinander anliegen und zusätzlich können zwei oder mehr der pultrudierten Profile nebeneinander angeordnet sein, so dass deren Stirnseiten aneinander anliegen.

In einer Ausgestaltung ist das Strukturbauteil ein Holm oder ein Gurt eines Windenergieanlagenrotorblatts.

Nachfolgend wird die Erfindung anhand eines in Figuren dargestellten Ausführungsbeispiels näher erläutert. Es zeigen:
- Fig. 1: eine schematische Darstellung eines pultrudierten Profils nach dem Stand der Technik,
- Fig. 2: einen Abschnitt eines pultrudierten Profils in einer Draufsicht auf eine Flachseite,
- Fig. 3: das pultrudierte Profil aus Fig. 2 in einer Draufsicht auf ein Ende des Profils,
- Fig. 4: einen Abschnitt des pultrudierten Profils aus Fig. 2 in einer Draufsicht auf eine Stirnseite,
- Fig. 5: einen Gurt eines Windenergieanlagenrotorblattes mit einer Vielzahl von pultrudierten Profilen in einer schematisch vereinfachten Querschnittsdarstellung,
- Fig. 6a-6c: verschiedene Varianten der Anordnung der Kanäle in den Stegen, veranschaulicht an Querschnittsdarstellungen aufeinandergestapelter Profile.

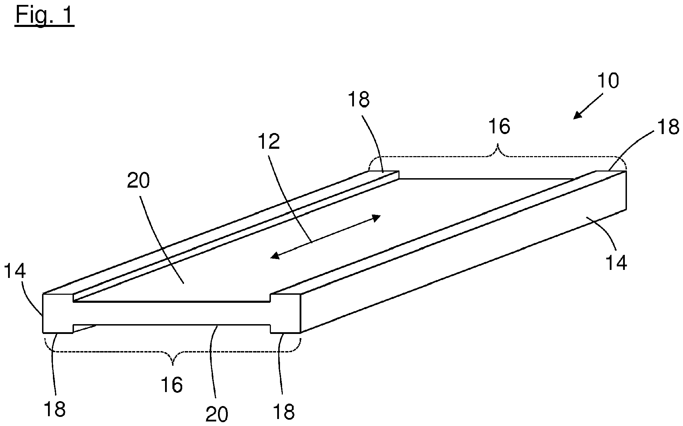

Fig. 1 zeigt eine schematische Darstellung eines pultrudierten Profils 10, welches aus einem faserverstärktem Kunststoffmaterial besteht. Das pultrudierte Profil 10 weist im Querschnitt eine im Wesentlichen rechteckige Grundform mit zwei einander gegenüberliegenden Stirnseiten 14 und zwei einander gegenüberliegenden Flachseiten 16 auf. Die Stirnseiten 14 verlaufen geradlinig und entsprechen einer Dicke des pultrudierten Profils 10. Die Flachseiten 16 entsprechen einer Breite des pultrudierten Profils 10. Die Längsrichtung des pultrudierten Profils wird durch einen Doppelpfeil 12 veranschaulicht.

Die beiden Flachseiten 16 weisen jeweils zwei in Längsrichtung des pultrudierten Profils 10 erstreckte Stege 18 sowie eine dazwischen angeordnete Vertiefung 20 auf. Die Breite der Stege 18 erstreckt sich jeweils von einer der Stirnseiten 14 bis zu einer an den Steg 18 angrenzenden Vertiefung 20. Die Vertiefungen 20 weisen einen ebenen Boden auf, so dass der zwischen den beiden Vertiefungen 20 des pultrudierten Profils 10 angeordnete Materialquerschnitt ebenfalls eine rechteckige Grundform aufweist.

Bei der Fertigung der pultrudierten Profile wird auf der Oberfläche Abreißgewebe angeordnet, um die Oberfläche der Profile zu schützen. Dieses wird vor der Weiterverarbeitung, z.B. vor dem Stapeln der Profile, von der Oberfläche abgezogen, wodurch die Vertiefungen 20 entstehen.

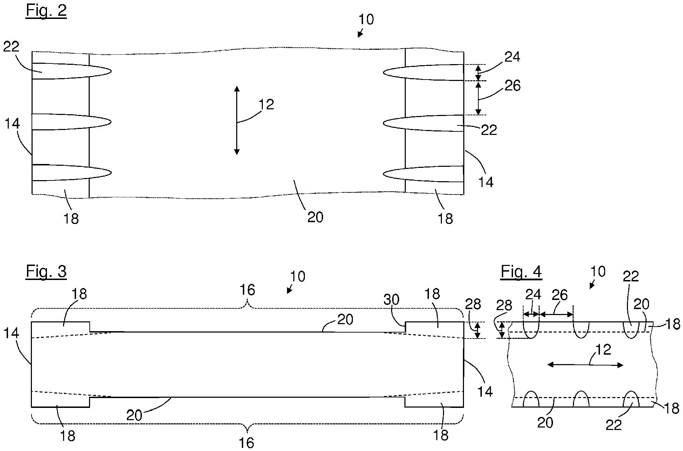

In den Figuren 2 bis 4 ist das erfindungsgemäße pultrudierte Profil in einer Ansicht von drei Seiten dargestellt.

Im Ausführungsbeispiel weisen alle Stege 18 jeweils eine Vielzahl von Kanälen 22 auf, die jeweils von einer der Stirnseiten 14 zu einer der Vertiefungen 20 führen.

Wie in den Fign. 2 und 4 erkennbar ist, sind die Abstände 26 zwischen zwei benachbarten Kanälen 22 größer als eine (maximale) Breite 24 der Kanäle.

Im in der Fig. 4 sichtbaren Querschnitt durch die Kanäle 22 ist erkennbar, dass die Kanäle einen ovalen oder annähernd halbkreisförmigen Querschnitt aufweisen. Die größte Tiefe 28 weisen die Kanäle an ihren stirnseitigen Enden, also an ihren an jeweils eine der Stirnseiten 14 angrenzenden Enden, auf, wie in den Fign. 3 und 4 eingezeichnet. Von dort nimmt die Tiefe 28 der Kanäle 22 zur Mitte der pultrudierten Profile 10 hin kontinuierlich ab, wobei die Kanäle 22 sich bis in die Vertiefungen 20 hinein erstrecken und dort flach auslaufen, wie in Fign. 2 und 3 erkennbar. Im Bereich der Stege 18 ist die Tiefe 28 der Kanäle durchgängig größer als die Tiefe der Vertiefungen 30, entsprechend der Höhe der Stege 18.

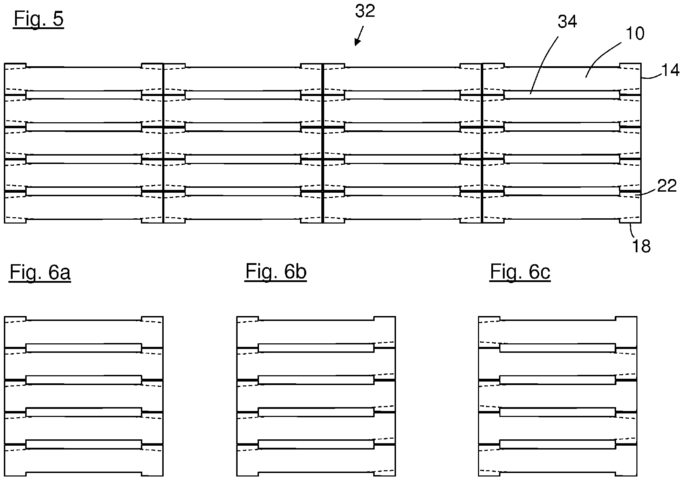

Fig. 5 zeigt zwanzig pultrudierte Profile 10, die zu einem Strukturbauteil eines Windenergieanlagenrotorblatts zusammengefügt sind. Das Strukturbauteil ist ein Gurt 32, dargestellt in einem vereinfachten Querschnitt. Die pultrudierten Profile 10 sind in fünf Lagen übereinander in einer ebenen Form (nicht dargestellt) angeordnet, wobei die Form aber auch eine leicht konkave Innenseite aufweisen kann, die der Kontur der aerodynamischen Hülle des Rotorblatts entspricht. Die übereinander angeordneten pultrudierten Profile 10 liegen jeweils im Bereich ihrer Stege 18 ganz oder teilweise aneinander an. Zwischen jeweils zwei dieser übereinanderliegenden pultrudierten Profile 10 ist ein von zwei einander gegenüberliegenden Vertiefungen 20 gebildeter Freiraum 34 ausgebildet, der bei der Herstellung des Strukturbauteils in einem Vakuuminfusionsverfahren mit einem flüssigen Kunststoffmaterial gefüllt worden ist, das nachfolgend aushärtet.

Im Beispiel der Fig. 5 sind vier dieser "Stapel" aus jeweils fünf übereinander angeordneten, pultrudierten Profilen 10 nebeneinander angeordnet, so dass sie im Bereich ihrer Stirnseiten 14 aneinander anliegen. Man erkennt, dass die von den Kanälen 22 hergestellten Verbindungen zwischen den Stirnseiten 14 und den Freiräumen 34 während der Vakuuminfusion alle Freiräume 34 erschließen, so dass ein hinreichender Volumenstrom des flüssigen Kunststoffmaterials in alle Freiräume 34 hinein ermöglicht wird.

In den Figuren 6a bis 6c sind weitere Varianten der Anordnung der Kanäle in den Stegen dargestellt. In allen drei Ausführungen weisen immer nur zwei Stege Kanäle auf. Diese Ausgestaltung ist insbesondere bei einem nachträglichen, z.B. spanenden Einbringen der Kanäle vorteilhaft, da sich hier der Arbeitsaufwand erheblich verringert. Der für die Harzinfusion erforderliche Volumenstrom kann über eine Anpassung des Querschnitts oder der Anzahl der Kanäle sichergestellt werden. In Fig. 6a befinden sich die Kanäle in den Stegen, die sich auf einer Flachseite des Profils befinden. In Fig. 6b befinden sich die Kanäle in zwei Stegen, die sich diametral gegenüber auf zwei Flachseiten des Profils befinden. In Fig. 6c befinden sich die Kanäle in zwei Stegen, die an dieselbe Stirnseite des Profils angrenzen.

### Liste der verwendeten Bezugszeichen:

- 10: pultrudiertes Profil
- 12: Doppelpfeil (Längsrichtung)
- 14: Stirnseite
- 16: Flachseite
- 18: Steg
- 20: Vertiefung
- 22: Kanal
- 24: Breite (Kanal)
- 26: Abstand (Kanäle)
- 28: Tiefe (Kanal)
- 30: Tiefe (Vertiefung)
- 32: Gurt
- 34: Freiraum

## Patentansprüche

1. Pultrudiertes Profil (10) für ein Strukturbauteil eines Windenergieanlagenrotorblatts, wobei das pultrudierte Profil (10) aus einem faserverstärkten Kunststoffmaterial besteht und zwei einander gegenüberliegende Stirnseiten (14) sowie zwei einander gegenüberliegende Flachseiten (16) aufweist, wobei an jeder der Flachseiten (16) zwei sich in Längsrichtung des pultrudierten Profils (10) erstreckende Stege (18) und eine dazwischen angeordnete Vertiefung (20) ausgebildet sind, **dadurch gekennzeichnet, dass** mindestens zwei der Stege (18) eine Vielzahl von Kanälen (22) aufweisen, die jeweils von einer der Stirnseiten (14) zu einer der Vertiefungen (20) führen.

2. Pultrudiertes Profil (10) nach Anspruch 1, **dadurch gekennzeichnet, dass** die Kanäle (22) in allen vier Stegen (18) ausgebildet sind.

3. Pultrudiertes Profil (10) nach Anspruch 1 oder 2, **dadurch gekennzeichnet, dass** in den Stegen (18) verlaufende Verstärkungsfasern des faserverstärkten Kunststoffmaterials im Bereich der Kanäle (22) durchtrennt sind.

4. Pultrudiertes Profil (10) nach Anspruch 1 oder 2, **dadurch gekennzeichnet, dass** in den Stegen (10) verlaufende Verstärkungsfasern des faserverstärkten Kunststoffmaterials im Bereich der Kanäle (22) nicht durchtrennt, sondern um die Kanäle (22) herum verlaufend angeordnet sind.

5. Pultrudiertes Profil (10) nach einem der Ansprüche 1 bis 4, **dadurch gekennzeichnet, dass** die Kanäle (22) geradlinig und quer zu einer Längsrichtung des pultrudierten Profils (10) ausgerichtet sind.

6. Pultrudiertes Profil (10) nach einem der Ansprüche 1 bis 5, **dadurch gekennzeichnet, dass** die Kanäle (22) einen halbkreisförmigen, elliptischen bzw. ovalen, trapezförmigen oder rechteckigen Querschnitt aufweisen.

7. Pultrudiertes Profil (10) nach einem der Ansprüche 1 bis 6, **dadurch gekennzeichnet, dass** die Vertiefungen (20) eine ebene Bodenfläche aufweisen.

8. Pultrudiertes Profil (10) nach einem der Ansprüche 1 bis 7, **dadurch gekennzeichnet, dass** eine Tiefe (28) der Kanäle mindestens so groß ist wie eine Tiefe (30) der jeweils angrenzenden Vertiefung (20).

9. Pultrudiertes Profil (10) nach einem der Ansprüche 1 bis 8, **dadurch gekennzeichnet, dass** eine Tiefe (28) und/oder ein Querschnitt der Kanäle (22) an ihren stirnseitigen Enden größer ist als ihren vertiefungsseitigen Enden.

10. Pultrudiertes Profil (10) nach einem der Ansprüche 1 bis 9, **dadurch gekennzeichnet, dass** sich die Kanäle (22) bis in eine jeweils angrenzende Vertiefung (20) hinein erstrecken.

11. Pultrudiertes Profil (10) nach einem der Ansprüche 1 bis 10, **dadurch gekennzeichnet, dass** eine Breite (24) der Kanäle (22) in Längsrichtung des pultrudierten Profils (10) kleiner ist als ein Abstand (26) zwischen zwei benachbarten Kanälen (22).

12. Strukturbauteil für ein Windenergieanlagenrotorblatt, wobei das Strukturbauteil mindestens zwei übereinander angeordnete, pultrudierte Profile (10) nach einem der Ansprüche 1 bis 11 aufweist, wobei die beiden Stege (18) einer oberen Flachseite (16) des einen pultrudierten Profils (10) an den beiden Stegen (18) einer unteren Flachseite (16) des anderen pultrudierten Profils (10) anliegen, so dass zwischen den Vertiefungen (20) der genannten Flachseiten (20) ein Abstand ausgebildet ist.

13. Strukturbauteil nach Anspruch 12, **dadurch gekennzeichnet, dass** das Strukturbauteil ein Holm oder ein Gurt (32) ist.
